Europäisches Patentamt

European Patent Office

Office européen des brevets

(11) Publication number: **0 121 593**
**A2**

# EUROPEAN PATENT APPLICATION

(21) Application number: **83109918.9**

(22) Date of filing: **10.04.81**

(51) Int. Cl.³: **G 03 G 15/04, G 02 B 13/00**

(30) Priority: **11.04.80 US 139462**

(43) Date of publication of application: **17.10.84**
**Bulletin 84/42**

(84) Designated Contracting States: **BE CH DE FR GB IT LI NL**

(60) Publication number of the earlier application in accordance with Art. 76 EPC: **0038497**

(71) Applicant: **Coulter Systems Corporation, 35 Wiggins Avenue, Bedford Massachusetts 01730 (US)**

(72) Inventor: **Thomas, Raymond E., 2865 Corlington Dr., Dayton Ohio 45440 (US)**
Inventor: **Tibbits, John L., 35 Graywood Court, Centerville Ohio (US)**
Inventor: **Keane, John F., 2423 Periwinkle Dr., Bellbrook Ohio (US)**
Inventor: **Kramer, George H., 2654 Henville Road, Xenia Ohio 45385 (US)**

(74) Representative: **Dorner, Jörg, Dr.-Ing. et al, Dorner + Hufnagel Patentanwälte Landwehrstrasse 37, D-8000 München 2 (DE)**

(54) Optical system for imaging an electrophotographic member.

(57) An optical system for imaging an electrophotographic member, which is carried on a drum (66), supplies a beam (60) of radiant energy, splits it into a fine beam (62) and a reference beam (118) and vertically aligns the fine and reference beams, respectively, above and below one another. The fine beam is composed of individual rays split from the supplied beam in response to electrical signals. Mirrors (122, 128, 134) and focusing lenses (124, 126, 132) direct the fine and reference beams through a field flattening lens (136) to a raster mirror (138), which reflects the beams back through the field flattening lens to the electrophotographic member. The raster mirror (138) oscillates back and forth about an axis and sweeps the fine and reference beams back and forth across an arc (142) with the fine beam describing an image line on the member. The vertical positions of the fine and reference beams are inverted by the raster mirror.

Munich, December 19, 1983
Official file: 83109918.9

C121593

The field of the invention comprises apparatus and a method for imaging electrophotographic members by means of radiant energy devices such as lasers, the imaged electrophotographic members being thereafter used for printing. In the case of lithographic offset printing, the actual imaged member itself is treated to render toned and untoned parts hydrophobic and hydrophilic respectively and the member comprises the plate without further processing. In other cases, the toned electrophotographic member may be used as an information source by reading the images or projecting them if transparent or photographically reproducing them if desired. The preferred use of the invention is to make the printing plates upon metal such as stainless steel. Each of these substrates is coated with a type of photoconductive coating which will be described hereinbelow.

In the printing industry, printing plates for printing both graphics and text have in the past been produced manually with the graphics images being reproduced using the so-called half tone process. In this process several photographic steps are used to reproduce the graphics image in an array of dots of varying size to reproduce the image on the printing plate. Text information has in the past been hand set, but now may be set by machine under control of electronic devices.

Forming printing plates carrying both graphics and text images may involve several steps, especially when color graphics are to be reproduced. In such a case, several color separation plates must be made for each color to be printed with the text information located on the plate in which color is to be printed. When text information is to be located within the field of the graphics image, additional steps are required to form the solid printing areas for the plates in that particular color and to remove the graphics image from those same text areas on the remainder of the color separation plates. This of course adds to the number of processed steps required to produce the desired graphics and text images. The steps of forming the graphics image to be printed in the graphics field is commonly known as overburning while the process of removing the graphics image from those same text areas in the other color separation plates to be printed is referred to or is commonly known as stripping.

In overburning, the negatives which form the graphics image and the text image to be formed in that field are overlayed one on another to form the desired color separation printing plate. In stripping, other techniques must be used to remove the graphics information from those same text image areas.

The process of forming printing plates containing both graphics and text data recently has been effected using essentially the same methods as were performed manually. Advanced systems however are able to compile from various input devices data which may be used to form both graphics and text information on a printing plate. But these systems have their drawbacks in that separate scanning cycles must be performed to form the graphics and text images on a single printing plate and in addition, complex switching circuits must be constructed to switch between text and graphics image formation when text images are to be formed within the field of a graphics image.

The apparatus and method of the present invention overcome these drawbacks presented by the manual and electronics systems by xpяx providing a system which in one pass of a beam of radiant energy may form both graphics and text images in response to graphics and text data input thereto. Formation of the graphics and text images may occur independently of one another so that different imaging schemes may be used to form scaled densities of the graphics images and the binary densities of the text images.

Formatting of the data is such that the graphics data
contains information related to the relative scale densities
of incremental areas of the graphics image with the remainder
of the graphics data being a nullity to clear the surface of
a charged electrophotographic member. The text data is formated
such that it does not affect the formation of the images carried
by the graphics data except in locations where text images are
to be formed.

Formation of text images within the field of graphics images
for several different color separation plates is performed simply
by reversing the logical sense of a control bit of every text
data digital word. Thus to produce text images of one color
such as blue a multicolor printed graphics image, the same data
may be used for all of the color separation plates with k the
control xix bit for the color separation plate used to print
the color blue set to one logical state and being set to the other
logical state for the remainder of the separation plates.

Thus the apparatus and method of the invention provide for
imaging of an entire printing plate with graphics and text
information in a single pass of a beam of radiant energy.

The apparatus and method of the invention include an optical
system in which a beam of radiant energy from a monochromatic
source such as a laser is used to selectively discharge and leave
charged incremental areas of a charged electrophotographic member.
Part of the beam is split and used as a reference beam. The
remainder of the beam is modulated to provide a scanning beam or
a fine beam comprised of individual rays of radiant energy with
each ray able to discharge an incremental of the member. The
reference beam and scanning beam or fine beam are aligned vertically
with one another with the vertical alignment being used in an opti-cal

0121593

grating system to precisely determine the location of the scanning beam along the surface of the member. A field flattening lens is used in which both the reference and fine beams passed therethrough and back again to the member, the field flattening lens providing the maintenance of a focused image on the surface of the member across every scan line.

0121593

## SUMMARY OF THE INVENTION

A digital plate maker system and apparatus which receives binary digital graphics and text data to form a toned latent image on electrophotographic member, the toned image thereafter being fused to the member and the member being used as a printing plate in an offset lithographic printing press. The plate maker system including an optical system, an electronics system and a toning system.

The optical system providing 22 individual rays of radiant energy with which to discharge incremental areas of the electrophotographic member. The optical system further providing field flattening to maintain a focused image of the individual rays across every scan line across the original image. An optical scale or grating system is provided which receives a reference beam of radiant energy vertically aligned with a fine beam which may be comprised of the 22 individual rays, the bar collector receiving the reference beam across the length of every scan line. The bar collector directs the radiant energy from the reference beam to a sensor which provides electrical signals indicating the position of the fine beam along the scan line.

A method of forming the text and graphics images on the member is implemented in electronic system. The graphic data is used to generate beam modulation signals to form the desired number of individual rays. The text data is used to modulate the beam modulation signals so that text images may be overlayed on graphic images or formed outside of fields of graphics images.

0121593

BRIEF DESCRIPTION OF THE DRAWINGS

Fig. 1 is a block diagram of an apparatus for making printing plates as constructed in accordance with the invention and uses the method of the invention;

Fig. 2 is a left-side elevation of the apparatus;

Fig. 3 is a plan view of the apparatus illustrated in Fig. 2 with the cover of the optical system and the cabinetry covering the drum removed;

Fig. 4 is a schemmatic diagram of the left-hand optical system of the apparatus;

Fig. 5 is a partial schematic diagram of the optical system illustrated in Fig. 4 taken along the lines 5-5 in the direction indicated;

Fig. 6 is a partial schematic diagram of the optical system illustrated in Fig. 4 and taken along the lines 6-6 in the direction indicated;

Fig. 7 is a partial schematic diagram of the optical system illustrated in Fig. 4 taken generally along the lines 7-7 in the direction shown       - and

Fig. 8 is a        representation of elements of a field flattening lens system .

DESCRIPTION OF THE PREFERRED EMBODIMENT

In the preferred embodiment, the imaging device receives digital data representing the graphics and text images to be printed or otherwise reproduced. This digital data is received from a compiling system which obtains raw data from such as optical scanning system, text input stations, etc., and compiles or formats the data representing the graphics and text materials into a form which may be used by the imaging device of the invention herein. The data received by the imaging device also may be generated or synthesized by a computer or by other means and may be presented to the imaging device from a memory in which it has been stored or it may be presented on line as it is generated or synthesized if the generation or sythesization rate if equal to or less than the imaging rate of an imaging device herein.

The output of the imaging device herein is an electrophoto- graphic member carrying a toned latent image of charged andxidix discharged incremental areas formed in response to the digital data. The toned member thereafter may be fused and processed for use as a printing plate in an offset lithographic printing press with the toned areas carrying ink to a receptor to form the tonal graphics and text images. If color printing is desired, as many electro- photographic members carrying toned latent images are formed, as there are colors which are desired to be printed, one member carrying a toned latent image for each of what is commonly known as a color separation.

The imaging device or imager used in the preferred embodiment of this invention uses a la er beam to image an electrophotographic member that includes a photoconductive coating that previously has been charged. The member is carried on a rotary drum, is toned on the drum and thereafter may be used to transfer the toned image or to servce as a medium for projection or printing of the image. In the case of printing, the toned image is used to carry ink in a printing press, the member having
been treated to achieve hydrophilic and hydrophobic areas to
enable offset lithographic use of member as a printing plate.

The preferred use of the imaged member herein is
as a printing plate and has the same type of photoconductive
imagable coating is preferably the receptor of the lazar beams
which comprise the output fox from the apparatus of the invention.
Such coating is that which is described and claimed in U.S. Patent
4,025,339.

The apparatus and method of the invention may best be
understood by considering that the binary digital data input
                                   binarily
to the apparatus is used to modulate a beam of radiant energy
from a lazar to selectively discharge and leave changed incremental
areas of a charged electrophotographic member. Thereafter, the
selectively charged and discharged pattern or image carried on
the member is toned and output from the apparatus.

The electrophotographic member is carried on the outer
circumference of a drum which is rotated along its longitudinal
axis. Charging, imaging and toning of the member on the drum
occurs sequentially at adjacent stations as the member is moved
past the stations by the rotating drum. Charging of the electro-
photographic member may be of any means desired and in the preferred
embodiment occurs by fax placing adjacent the outer circumference
of the drum a wire having a high voltage applied thereto. Toning
of the imaged member occurs by applying to the member a quantity
of carrier fluid obtaining toner particles. The charging and toning
occurring at stations respectively above and below an imaging plane.
Imaging of the charged electrophotographic member occurs by passing
a fine beam of radiant energy from a lazer across the surface of
the sas member in image lines which are parallel to the longitudinal
axis of the drum and Xyxix lie in the imaging plane. Imaging of the entire surface of the charged member occurs in sequential image
lines as the member is moved by the drum past the imaging plane.

The digital input to the imaging apparatus is in the
form of two channels of graphics data and one channel of text
data. Each digital word of the graphics data is used to form
a picture element or a graphics pixel on the electrophotographic
member. Every imaging line is comprised of two scan lines of
graphics pixels with each channel of graphic's data respectively
controlling the forming of graphics pixels in one scan line.

The text data controls the formation of text pixels
across the entire scan line and therefore only one channel of
text data is required. Every word of the text data is comprised
of 8-bits of information with the least significant six bits
each controlling the binary density of a text pixel, the next
least significant bit serving as a control bit, and the most
significant bit not being used.

The graphics data and text data are formated such that
they may individually form respective graphics or text images
across the entire area of the electrophotographic member.
The electronics of the invention herein uses both text and
graphics data to form one channel of laser modulation signals.
Further, in the imaging apparatus herein, the information carried
by the text data is used to gate the formation of the individual
ray s of the fine beam of radiant energy, each of which rays
are used to discharge an incremental area on the charged electro-
photographic member. Simply stated, it may be thought of that
the text data is used to gate or modulate the formation of
graphics pixels in response to the graphic data. Thus if the
text data is a nullity, no text images are to be formed on the member,
the information carried by the graphics data will form the graphic
image represented thereby and discharge the remaineder of the member.

Where the text data contains information representing
a text image to be formed on the member, the text data may either

0121593

inhibit the formation of individual rays of the fine beam or depending on the logical state of the control bit included in each word of text data. ...When the text data inhibits the formation of individual rays of the fine beam, the text image is formed on the member which will be toned and in the printing plate will carry ink to the receptor to print a solid image. This is a case where black text is desired on any background. When the text data forms individual rays of the fine beam, text pixels are discharged on the member with the discharged areas of the member forming areas of the printing plate which do not print on the receptor or which remain clear. This is the case where clear text is desired within a graphics image. Within the preferred embodiment of the invention, the text pixels are nine times more numerous than the graphics pixels, i.e., for every graphics pixel, there are nine text pixels which may be discharged or left charged. The resolution provided by the text pixels is

not however /the resolution provided by the graphics pixels
                    nine times

because of overlap of the text pixels. Of course it will be understood that the electrophotgraphic member is not physically divided into pixels of any type, scan lines or image lines, and that these terms are used only to describe the operation of the imaging apparatus and method.

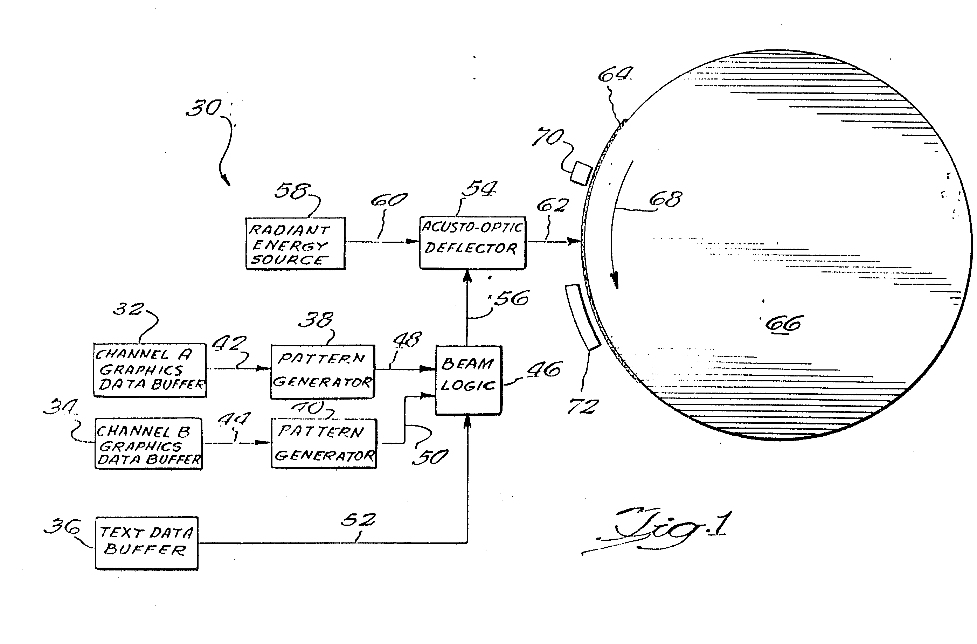

Referring now to Fig. 1 of the drawings, the apparatus of the invention there is illustrated diagrammatically is indicated generally by the reference character 30. Two channels of graphics data are received by the apparatus respectively on channel A and channel B graphics data buffers 32 and 34. Text data is received into text data buffer 36. The graphics data contained in data buffers 32 and 34 individually are applied to pattern generators 38 and 40 over leads 42 and 44. In pattern generat

generators 38 and 40, the density information carried by the digital words of the graphics data are converted into patterns of elements which are to be formed in graphics pixels on the member,

the pixel patterns representing the densities indicated by the ( graphics data.)

The pattern information produced by pattern generators 38

and 40 then is applied to modulator 46 on leads 48 and 50 together with the text data from text data buffer 36 on lead 52.

In modulator 46, the text data is xn used to modulate the pattern information from pattern generators 38 and 40. The output of modulator 46 which is applied to acousto-optic modulator 54

is the ray data which controls the formation of individual

rays in the fine beam. The output of modulator 46 is carried to the acousto-optic modulator 54 on lead 56. A radiant energy source 58 is provided which produces a beam of radiant energy 60 which essentially at one wave length and which is directed to acousto-optic modulator 54. Radiant energy source 58 is in the preferred embodiment a lazar with the wave length of the beam of radiant energy 60 being chosen to most advantageously discharge area of the electrophotographic member. Acousto-optic modulator 54 modulates the beam of radiant energy 60 to provide a fine beam 62 of radiant energy comprised of a plurality of individual rays and in some cases as little as a single ray.

The fine beam 62 is directed onto an electrophotographic member 64 carried on a drum 66 rotating in the direction indicated by arrow 68. The thickness of member 64 is exagerated in Fig. 1 only so that member 64 may easily be seen on the circumference of drum 66. Charging of member 64 occurs at charging station 70 prior to the time at which fine beam 62 is applied to member 64

and toning of member 64 occurs after imaging by fine beam 62

at station 72.

0121593

It should be pointed out that while the preferred purpose of the invention is to make offset lithographic plates by electrostatic techniques described herein, any use of an electrophotographic member will find advantages where a member has been imaged according to the invention.

It will be appreciated that in forming several different color separation plates, it may be desired to form text images of a single color (for example blue text) in a field of a graphic image or otherwise. Thus in the blue printing separation plate, the text image must be found solid. On the other color separation plates that same area must be cleared so that only the color blue will be printed therein or the recepta. Thus by selectively using the solid forming and clearing capabilities of the text data, one may form the solid printing blue text image in the field of graphics or otherwise as may be desired.

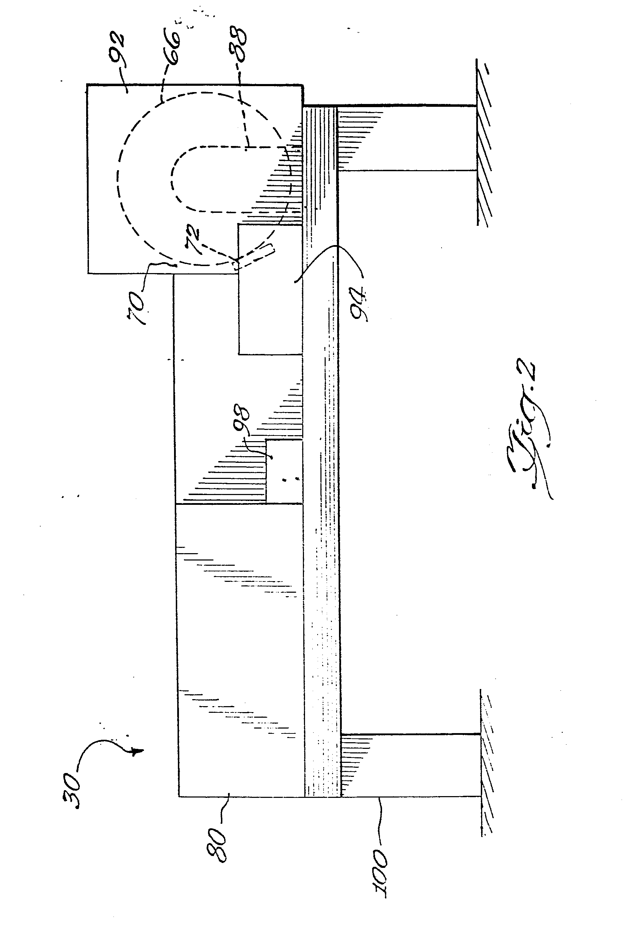

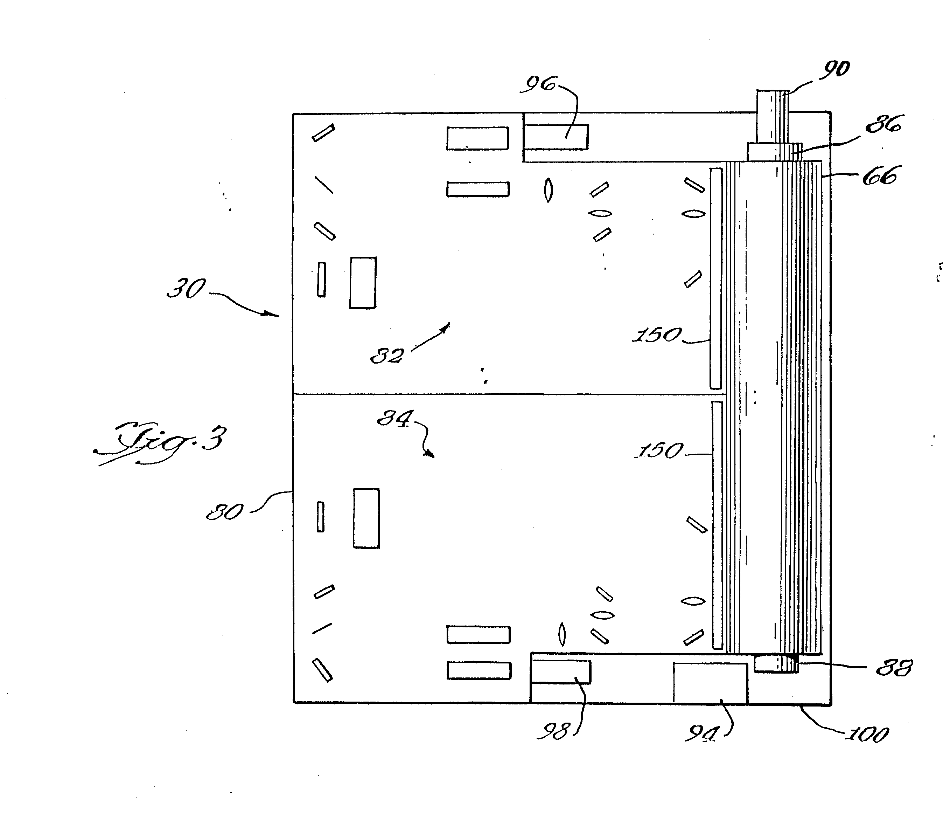

Turning now to Figs. 2 and 3, the preferred embodiment of the digital plate maker is illustrated including some of the cabinetry provided therewith. The apparatus 30 includes an optical cabinet 80 which encloses a left-hand optical system 82 and a right hand optical system 84. Drum 66 extends the width of the left-hand and right-hand optical systems 82 and 84 so that an electrophotographic member carried thereon may be simultaneously and separately imaged by respective optical systems. Drum 66 is supported at each end by supports 86 and 88 and is rotationally driven by motor 90. As shown in Fig. 2, the drum is enclosed by a housing 92, which protects a member carried on drum 66 from ambient light. Optical cabinet 80 and housing 92 adjoin each other there being only a small slit opening between them through which the fine beam passes on its way to the charged electrophotographic member.

The electrophotographic member is held on drum 66 by a magnetic chuck which is formed of a magnetic strips extending the length of drum 66 at the circumference thereof. The magnetic field produced by these magnetic strips is strong enough so that an electrophotographic member having a substrate of such as stainless steel will be securely held on the drum. In the preferred embodiment, the drum circumference is 1250 mm. while the drum length is 1, 100 mm. The drum is continuously rotated at a speed of 0.125RPM which corresponds to 180 revolutions per day or 8 minutes per revolution. This provides a drum speed of 2.6 mm per second.

The center line of the charging station 70 is arranged to be 25 degrees above the image plane, while the center line of the toning station 72 is arranged to be 30 degrees below the imaging plane.

The maximum size electrophotographic member which may be carried by the drum 66 is a member which is 1.040 by 1.040 mm and the area of the member which may be imaged by each of the left and right hand optical systems is 50 cm. axial of the drum by 70 cm. circumferential of the drum or an area which is 20 X 28 inches.

A cabinet 94 is provided in which the toning tanks and pumps are contained with the hydraulic and nomadic connections between cabinet 94 and toxigx toning station 72 (not shown in the drawings for clarity purposes.) Mounted on the exterior of cabinet 80 are two lazers 96 and 98, which provide the radiant energy respectively to the tigk left-hand and right-hand optical systems 82 and 84. The entire apparatus 30 is supported by a frame 100 having the general configuration of a table. Auxillary equipment for operating the apparatus 30 such as power supplies for the lazers 96 and 98 serve or control electronics for the motor 90 and auxillary tanks for the toning system may be be mounted under frame 100, and are not shown in Fig. 2 for clarity of the drawing.

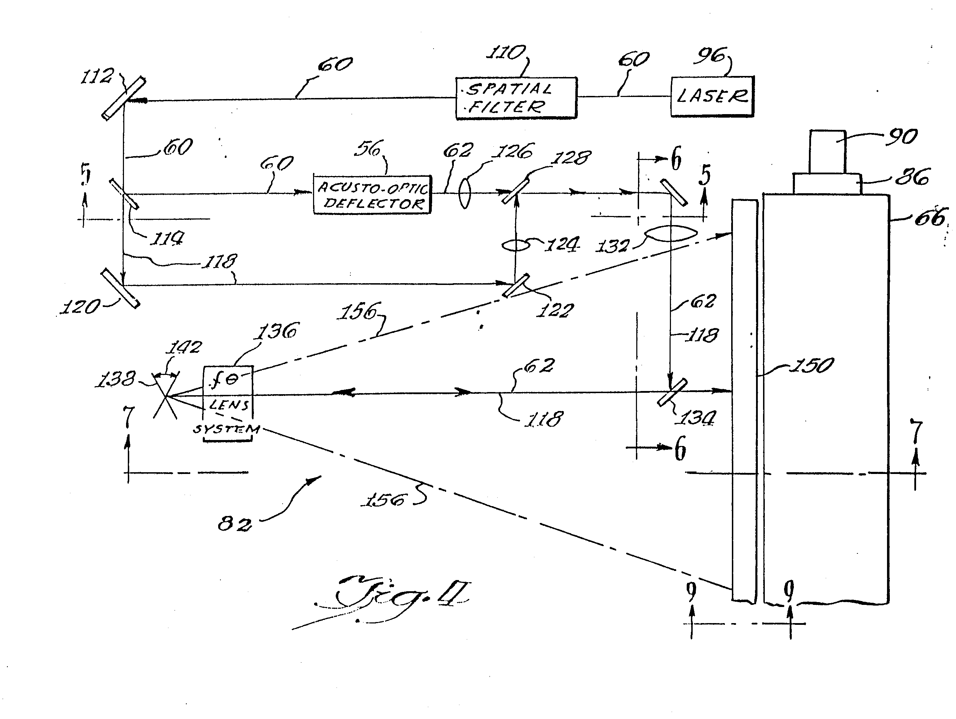

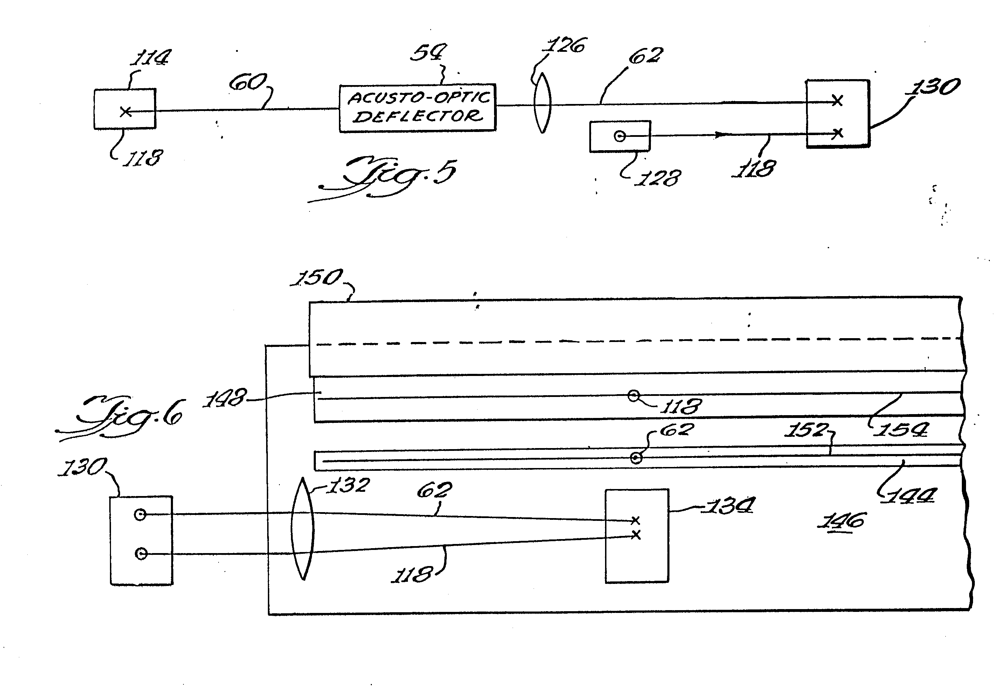

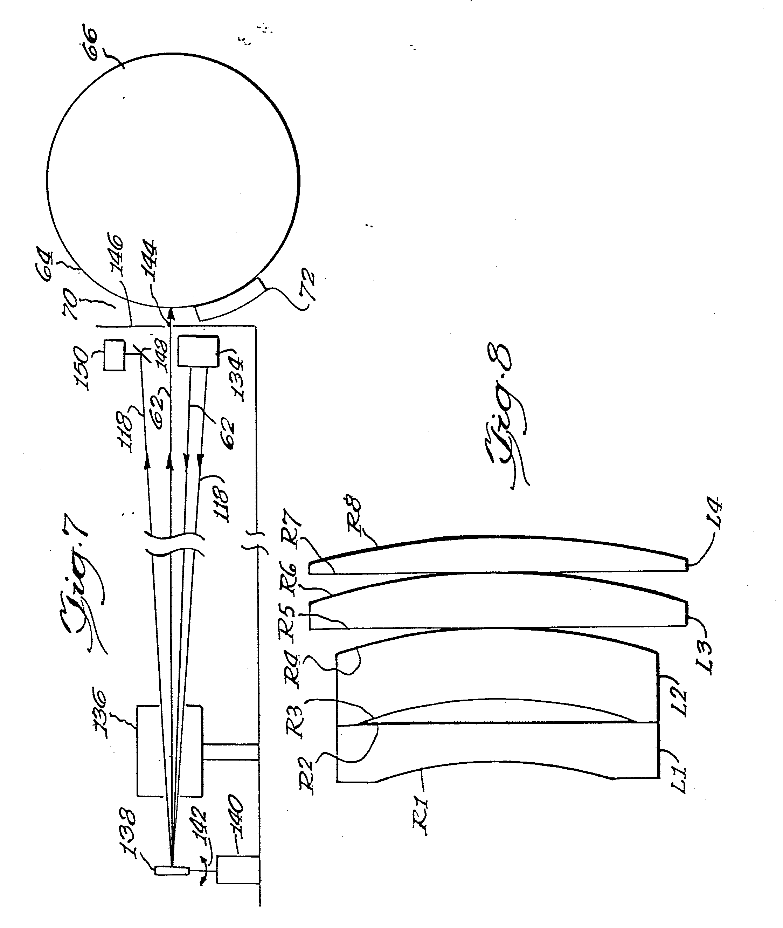

As may be seen in Fig. 3, the left-hand and right-hand optical systems 82 and 84, are mirror images of one another so that a description of one is a description of the other. Referring also to Figs. 4, 5 , 6 and 7, lazer 96 provided the beam of radiant energy 60 to special filter 110 which provides what may be termed a pinhole aperture to obtain a desired cross-sectional size of the beam. The beam 60 is transmitted through spatial filter 110 to folding mirror 112 which deflects beam 60 to beam splitter 114. A xxa portion of beam 60 is transmitted through beam splitter 114 and forms a reference beam 118 which is deflected by folding mirror 120 and 122 to a spot forming lens 124. The portion of beam 60 which is deflected by beam splitter 114 is directed to acousto-optic deflector 54 which forms of beam 60 the individual rays which have been refered to as the fine beam 62. Fine beam 62 exits acousto-optic deflector 54 and passes through spot forming lens 126 and passes under folding mirror 128. Reference beam 118 passes through spot forming lens 124 as deflected by folding mirror 128. After fine beam 62 passes under folding mirror 128, fine beam 62 and reference beam 118 are vertically aligned with one another through the remainder of the optical path. Referring to Fig. 5, reference beam 118 which is transmitted through beam splitter 114 is represented by a crossed line indicating the light in reference beam 118 is exiting the drawing figure. Folding mirror 128 also is shown in Fig. 5 located above fine beam 62 after it passes through spot forming lens 126 and the circle at the center of folding mirror 128 representing that reference beam 118 is directed into drawing fig.5. Fine beam 62 and reference beam 118 then are deflected by folding mirror 130 with the crossed lines in Fig. 5 on folding mirror 130 indicating the light is exiting from the drawing figure while the xu circles on folding mirror 130 on Fig. 6 indicate that the light is entering the drawing figure.

Fine beam 62 and reference beam 118 then are passed through a relay lens 132 to a folding mirror 134. Again the crossed lines on folding mirror 134 on Fig. 6 representing that the beams are exiting the drawing figure. As also is shown in Fig. 7, beams 62 and 118 are deflected by folding mirror 134 through an f θ lens system 136 to a galvanometer mirror 138. Galvanometer mirror 138 is rotatatbly oscillated in the directions indicated by arrow 142 and directs fine beam 62 back through the f θ lens system 136 through an aperture 144 extending through the front plate 146 of cabinet 80 and then onto the charged electrophotographic member 64. Reference beam 118 is deflected by galvanometer mirror 138 back through f θ lens system 136 and onto a folding mirror 148 to an optical scale or grating system 150.

It will be noted that the deflection of fine beam .62 and reference beam 118 in horizontal directions by galvanometer mirror 138 does not disturb the vertical alignment of these two beams so that the position of reference beam 118 may be sensed by the optical scale or grating system and precisely locate the position of fine beam 62 which is used to image or write the images on the electrophotographic member 64. Galvanometer mirror 138 deflects fine beam 62 through a scan line 152 illustrated in Fig. 6 and deflects reference beam 118 along a scan line 154 lying on deflecting mirror 148. The extent to which the galvanomter mirror deflects fine beam 62 and reference beam 118 are represented in Fig. 4 by dashed lines 156.

It will be noted that as illustrated in Figs. 6 and 7, fine beam 62 and reference beam 118 are located below the imaging plane defined by fine beam 62 as it passes through aperture 144 and is directed onto electrophotographic member 64. The F θ lens lens system 136 provides field flattening for both fine beam
62 and reference beam 118 so that they may be maintained in focus
respectively across the surface of the electrophotographic member
64 and across the surface of the optical scale or graing grating
system 150. It will be noted that the distance travelled by
fine beam 62 along an optical path from spot focusing lens 126
to member 64 is equal to the distance travelled along the optical
path by reference beam 118 from spot forming lens 124 to optical
scale or grating system 150.

The spacial filter or folding mirrors, beam splitters,
spot forming lenses, relay lens and galvanometer mirror are
all common optical elements which readily may be contructed and
arranged in a system as has been described as may be desired.

In the preferred embodiment this spot forming lenses
have a focal length of 26 mm, the relay lens has a focal length
of 200 mm and the F θ system has a focal length of 870 mm.
The distance between the spot forming lens and the relay lens
is 559.2 mm while the distance between the relay lens and the F θ
lens is 1,190 mm. The distance from the F θ system to the focal
plane at the electrophotographic member 64 and the optical scale
system 150 is of course 870 mm.

The f θ lens system 136 is illustrated in Fig. 8 and
comprises elements L1 through L4 having surfaces defined by
radii R1 through R8 as shown.

The lens of Fig. 8 comprises from the object end a
first positive group L1, L2 having a concave object side surface;
a second positive group L3 having a flat object side surface;
and a third positive group L4 having a flat object side surface
and a convex image side surface.

The lens of Fig. 8 is defined substantially by the data
of Table I, as scaled to a focal length of 870 mm;

| LENS | Radius | Axial Distance Between Surfaces (mm) | N<br>d | V<br>d |
|------|--------|--------------------------------------|------|------|
| | R1 −161.744 | | | |
| L1 | | 15.00 | 1.617 | 36.6 |
| | R2 ∞ | | | |
| | | 6.97 | | |
| | R3 −216.311 | | | |
| L2 | | 28.871 | 1.523 | 58.6 |
| | R4 −213.119 | | | |
| | | 0.20 | | |
| | R5 −2575.204 | | | |
| L3 | | 18.06 | 1.523 | 58.6 |
| | R6 −264.288 | | | |
| | | 0.20 | | |
| | R7 ∞ | | | |
| L4 | | 13.00 | 1.523 | 58.6 |
| | R8 −265.847 | | | |

The lens disclosed may of course be scaled otherwise as is desired.

The acousto-optic deflector 54 is capable of separating beam 60 into as many as 22 individual rays or beamlets which form fine beam 62. In the preferred embodiment as many as 22 individual radio frequency signals may be applied to acousto-optic deflector 54 to deflect the 22 individual rays each radio frequency signal being capable of deflecting one individual ray. Acousto-optical deflector 54 is constructed and arranged so that the individual rays/are which deflected from beam 60 are aligned vertically in fine beam 62 and so that in the focused images formed on the electro-photographic member 64 are arranged adjacent and spaced equidistant from one another. Thus a radio frequency signal of the first frequency will form one individual ray while the next radial frequency signal will form an adjacent ray and so on. In the preferred embodiment acousto-optic deflector 54 is capable of deflecting 22 individual rays and although deflector 54

operates on the principle of acoustically deflecting the individual rays other deflection apparatus may be used in place of.

Claims:

1. Optical system for use in imaging at a scan line an electrophotographic member (64) which is charged to form a latent image of charged and discharged areas, the member thereafter being used as a printing plate, the optical system including:

means (96) for supplying a beam (60) of radiant energy;

splitter means (114) for splitting from the beam a reference beam (118) of radiant energy;

modulator means (56) for deflecting individual rays from the beam of radiant energy in response to electrical signals applied thereto, the individual rays forming a fine beam (126);

alignment means (122, 124, 128, 130, 132, 134) for aligning the fine beam and reference beam vertically, one above the other;

focussing means (124, 126) providing image spots corresponding to the objects represented by the reference and scanning beam, lens means (136) arranged centered with the latent image to be formed on the member and perpendicular to the scan line;

mirror means (138) which is rotatable for reflecting the reference and scanning beams which pass through the lens means back through the lens means and onto the member along the scan line;

deflection means (134) for deflecting the reference beam and scanning beam through the lens means along a path centered with the member but at a level below the scan line;

2 0121593

the lens means (136) providing field flattening of the reference and scanning beams passed therethrough and back again by the mirror means (138) to maintain a focused image on the member (64) along a scan line in response to the objects; and
the scanning beam being reflected by the mirror means along the scan line with the reference beam being reflected above the scan line.

2. Field flattening lens (136) for use in an optical imaging system wherein a beam of radiant energy is passed through the lens and back through the lens by a mirror (138) which deflects the beam across a scan line, the lens comprising:
a plurality of lens groups ($L_1$, $L_2$, $L_3$, $L_4$)
from the object to the image end a first positive group ($L_1$) having a concave object side surface, a second positive group ($L_2$) having a concave object side surface, a third positive group ($L_3$) having a flat object side surface, and a fourth group ($L_4$) having a flat concave side surface to provide field flatening of the beam of radiant energy along the scan line.

3. Lens as claimed in claim 2 defined substantially by the following data, where the elements $L_1$, $L_2$, $L_3$ and $L_4$ comprise respectively the first, second, third and fourth groupings:

| Lens | | Radius | Axial Distance Between Surfaces (mm) | $N_d$ | $V_d$ |
|---|---|---|---|---|---|
| | $R_1$ | -161.744 | | | |
| $L_1$ | | | 15.00 | 1.617 | 36.6 |
| | $R_2$ | $\infty$ | | | |
| | | | 6.97 | | |
| | $R_3$ | -216.311 | | | |
| $L_2$ | | | 28.871 | 1.523 | 58.6 |
| | $R_4$ | -213.119 | | | |
| | | | 0.20 | | |
| | $R_5$ | -2575.204 | | | |
| $L_3$ | | | 18.06 | 1.523 | 58.6 |
| | $R_6$ | -264.288 | | | |
| | | | 0.20 | | |
| | $R_7$ | $\infty$ | | | |
| $L_4$ | | | 13.00 | 1.523 | 58.6 |
| | $R_8$ | -265.847 | | | |

where $L_1$ - $L_4$ are lens elements from the object to the image end, $R_1$ - $R_8$ are the radii of the surfaces of the lens elements,

$N_d$ is the index of refraction, $V_d$ is the Abbe number of elements $L_1$ through $L_4$.

Fig.1

RADIANT ENERGY SOURCE 58

ACUSTO-OPTIC DEFLECTOR 54

BEAM LOGIC 46

PATTERN GENERATOR 38

PATTERN GENERATOR 40

CHANNEL A GRAPHICS DATA BUFFER 32

CHANNEL B GRAPHICS DATA BUFFER 34

TEXT DATA BUFFER 36

Fig.2

Fig. 3

Fig. 11

Fig.5

Fig.6

Fig·7

Fig·8

0121593